# EUROPEAN PATENT SPECIFICATION

(11) **EP 3 306 496 B1**
(45) Date of publication and mention of the grant of the patent: **24.03.2021**
(21) Application number: 17186618.9
(22) Date of filing: 17.08.2017
(51) Int. Cl.: G06F 16/25, G06F 16/22

(54) **ENCODING PROGRAM, ENCODING METHOD, AND ENCODING APPARATUS**
CODIERUNGSPROGRAMM, CODIERUNGSVERFAHREN UND CODIERUNGSVORRICHTUNG
PROGRAMME DE CODAGE, PROCÉDÉ DE CODAGE, ET APPAREIL DE CODAGE

(30) Priority: 07.10.2016 JP 2016198915
(43) Date of publication of application: 11.04.2018
(73) Proprietor: FUJITSU LIMITED, Kanagawa 211-8588 (JP)
(72) Inventor: Matsui, Ryu, Kanagawa, 211-8588 (JP); Tomiyama, Yoshihide, Kanagawa, 211-8588 (JP); Kataoka, Masahiro, Kanagawa, 211-8588 (JP)
(74) Representative: Hoffmann Eitle

(56) References cited:
- EP-A1- 2 040 180
- GRAEFE G ET AL: "Data compression and database performance", APPLIED COMPUTING, 1991., ÝPROCEEDINGS OF THE 1991 SYMPOSIUM ON KANSAS CITY, MO, USA 3-5 APRIL 1, LOS ALAMITOS, CA, USA,IEEE COMPUT. SOC, US, 3 April 1991 (1991-04-03), pages 22-27, XP010022657, DOI: 10.1109/SOAC.1991.143840 ISBN: 978-0-8186-2136-9
- Vijayshankar Raman ET AL: "How to Wring a Table Dry: Entropy Compression of Relations and Querying of Compressed Relations", VLDB '06: Proceedings of the 32nd international conference on Very large data bases, 12 September 2006 (2006-09-12), pages 858-869, XP055039042, Retrieved from the Internet: URL:http://delivery.acm.org/10.1145/117000 0/1164201/p858-raman.pdf?ip=145.64.134.241 &acc=ACTIVE SERVICE&CFID=162939112&CFTOKEN=39118953&__ acm__=1348501251_4a3e63a8ff50321a2c257e160 7311aec [retrieved on 2012-09-24]

## Description

### FIELD

The embodiment discussed herein is related to an encoding program and the like.

### BACKGROUND

ETL (Extract/Transform/Load) processing is performed by referring to data existing in a plurality of tables. In referring to a plurality of tables, processing using a dedicated tool and the like is performed. For example, a table is described in a general-purpose file such as csv (Comma-Separated Values) and then compressed by a zip compression format.

According to a conventional technique, an operation for accepting processing target column information, which specifies columns to be processed, and extracting the columns to be processed from a table is performed before an operation for compressing data on the extracted columns is performed. To obtain a certain compression ratio, the zip compression is performed beyond delimiters indicating column separations.

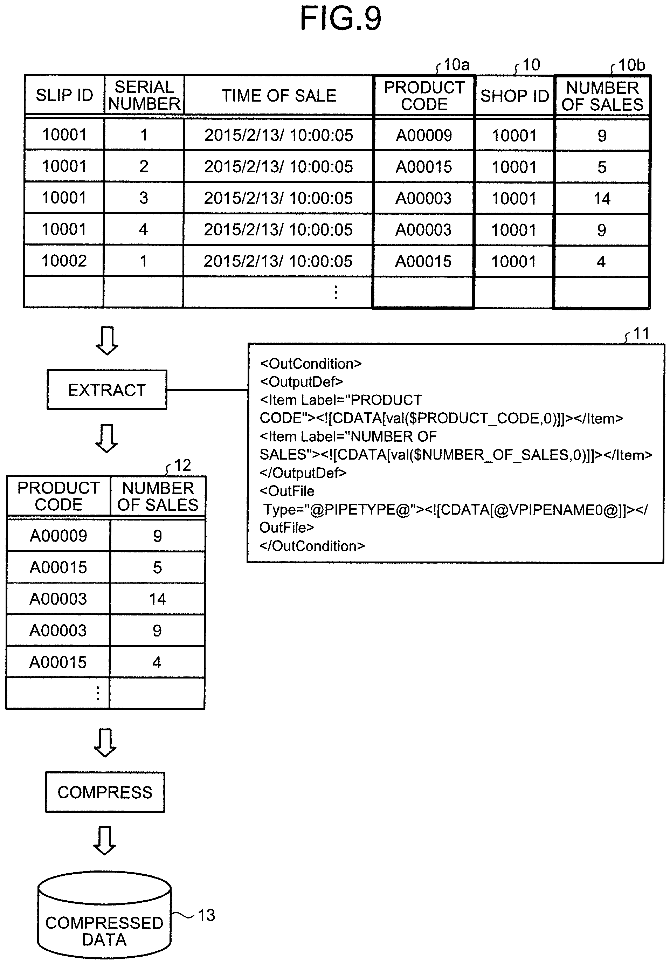

FIG. 9 is a diagram for describing the conventional technique. In FIG. 9, processing using a table 10 will be described as an example. Items "slip ID, serial number, time of sale, product code, shop ID, and number of sales" and values corresponding to the respective items are set in the table 10. The values of the columns corresponding to the respective items are separated by delimiters. According to the conventional technique, when processing target column information 11 is accepted, extracted data 12 is generated by extracting columns to be processed on the basis of the processing target column information 11.

The processing target column information 11 illustrated in FIG. 9 specifies that the columns of the items "product code" and "number of sales" are extracted. According to the conventional technique, data 10a corresponding to the column of the item "product code" and data 10b corresponding to the column of the item "number of sales" are extracted from the table 10 to generate extracted data 12. The pieces of data included in the extracted data 12 are separated column by column. For example, in the record of the first row of the extracted data 12, "A00009" and "9" are separated by a delimiter.

According to the conventional technique, if the extracted data 12 is compressed by zip, the extracted data 12 is compressed without considering the column separations. Compressed data 13 is thereby generated.
The compression is thus performed across the columns. For example, "A00009" and "9" are compressed together.
[Patent Literature 1] Japanese Laid-open Patent Publication No. 2014-191593
[Patent Literature 2] Japanese Laid-open Patent Publication No. 09-204349
[Patent Literature 3] Japanese Laid-open Patent Publication No. 07-220051
[Patent Literature 4] Japanese Laid-open Patent Publication No. 2012-256144
[Patent Literature 5] European Patent Application Publication No. 2 040 180 A1
[Non-Patent Literature 1] GRAEFE G ET AL: "Data compression and database performance", APPLIED COMPUTING, 1991, DOI: 10.1109/SOAC.1991.143840 ISBN: 978-0-8186-2136-9

As described in FIG. 9, the conventional zip compression is performed beyond delimiters for the sake of compression efficiency. Consequently, for example, the compressed data 13 itself is difficult to identify column separations. An intermediate decoded file or the like of the compressed data 13 is therefore generated for the purpose of identifying column separations only, which is inefficient.

Further, as discussed in Patent Literature 5 and Non-Patent Literature 1, an "integer and database" approach may be used, where compressed data stored in a database is referenced by an integer stored in the columns. However this approach still requires an intermediate file, i.e. the database.

Accordingly, it is an object in one aspect of an embodiment of the invention to provide an encoding program, an encoding method, and an encoding apparatus for generating encoded information from which column separations can be determined without generating an intermediate file.

### SUMMARY

According to an aspect of an embodiment, an encoding program that causes a computer to execute a process including: obtaining processing target column information for identifying a plurality of processing target columns to be processed among a plurality of columns included in a table in which the plurality of columns are separated by separation information; encoding the plurality of processing target columns of the table in units of columns by using the processing target column information; and generating an encoded table in which the plurality of encoded processing target columns are connected.

### BRIEF DESCRIPTION OF DRAWINGS

FIG. 1 is a diagram for describing processing of an encoding apparatus according to an embodiment;
FIG. 2 is a diagram illustrating a configuration of a system according to the present embodiment;
FIG. 3 is a functional block diagram illustrating a configuration of an encoding apparatus according to the present embodiment;
FIG. 4 is a diagram illustrating an example of a data structure of a data processing definition file;
FIG. 5 is a diagram illustrating an example of a data structure of processing data;
FIG. 6 is a diagram illustrating an example of a data structure of an encoded table;
FIG. 7 is a flowchart illustrating a processing procedure of the encoding apparatus;
FIG. 8 is a diagram illustrating an example of a computer executing an encoding program; and
FIG. 9 is a diagram for describing a conventional technique.

### DESCRIPTION OF EMBODIMENT

According to the foregoing conventional technique, there is a problem that column separations are not identifiable unless the encoded information is once converted into an intermediate file.

Preferred embodiments of the present invention will be explained with reference to accompanying drawings. The present invention is not limited by this embodiment.

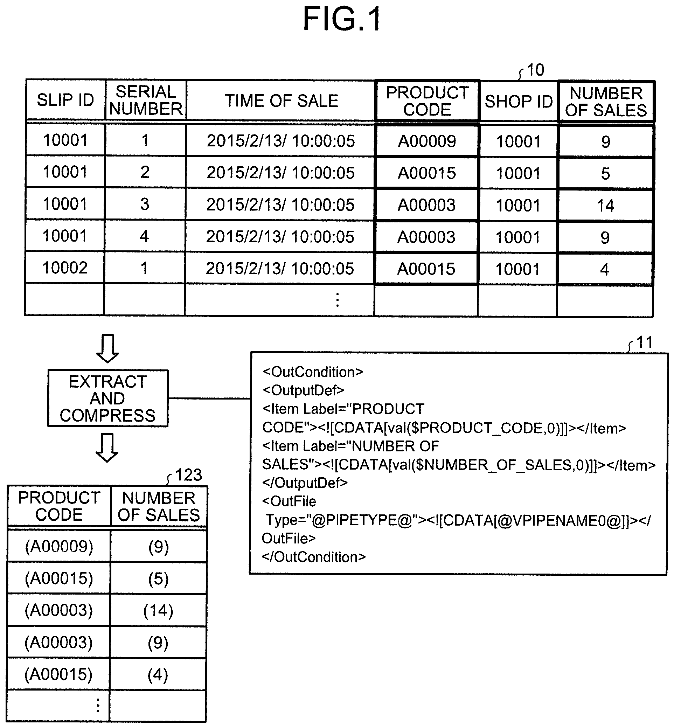

FIG. 1 is a diagram for describing processing of an encoding apparatus according to the present embodiment. In FIG. 1, a description will be given by using a table 10 as an example. Items "slip ID, serial number, time of sale, product code, shop ID, and number of sales" and values corresponding to the respective items are set in the table 10. The values of the columns corresponding to the respective items are separated by delimiters. When the encoding apparatus accepts processing target column information 11, the encoding apparatus scans the columns of the table 10 on the basis of the processing target column information 11.

If the encoding apparatus scans the columns of the table 10 and hits a column to be processed, the encoding apparatus extracts the hit column in units of columns, and encodes the extracted column. The encoding apparatus repeatedly executes the foregoing processing to encode columns to be processed in units of columns, and connects the pieces of encoded information to generate an encoded table 123.

The processing target column information 11 illustrated in FIG. 1 specifies that the columns of the items "product code" and "number of sales" are extracted. When the encoding apparatus scans the columns in the record of the first row of the table 10, "A00009" and "9" are hit as columns to be processed. The encoding apparatus then encodes "A00009" into "(A00009)" and "9" into "(9)". For convenience of description, in the present embodiment, information about an encoded column will be parenthesized.

When the encoding apparatus scans the columns in the record of the second row of the table 10, "A00015" and "5" are hit as columns to be processed. The encoding apparatus then encodes "A00015" into "(A00015)" and "5" into "(5)". When the encoding apparatus scans the columns in the record of the third row of the table 10, "A00003" and "14" are hit as columns to be processed. The encoding apparatus then encodes "A00003" into "(A00003)" and "14" into "(14)".

When the encoding apparatus scans the columns in the record of the fourth row of the table 10, "A00003" and "9" are hit as columns to be processed. The encoding apparatus then encodes "A00003" into "(A00003)" and "9" into "(9)". When the encoding apparatus scans the columns in the record of the fifth row of the table 10, "A00015" and "4" are hit as columns to be processed. The encoding apparatus then encodes "A00015" into "(A00015)" and "4" into "(4)".

The encoding apparatus connects the pieces of encoded information to generate the encoded table 123 illustrated in FIG. 1.

As described above, the encoding apparatus generates the encoded table 123 by identifying the columns to be processed from the table 10 in which a plurality of columns are separated by delimiters, and encodes the columns to be processed in units of columns. Even in the encoded state, column separations can thus be identified in units of pieces of encoded data. For example, in the example illustrated in FIG. 1, the presence of the separation between "(A00009)" and "(9)" can be determined. Encoded information in which column separations can be identified can thus be generated without generating an intermediate file.

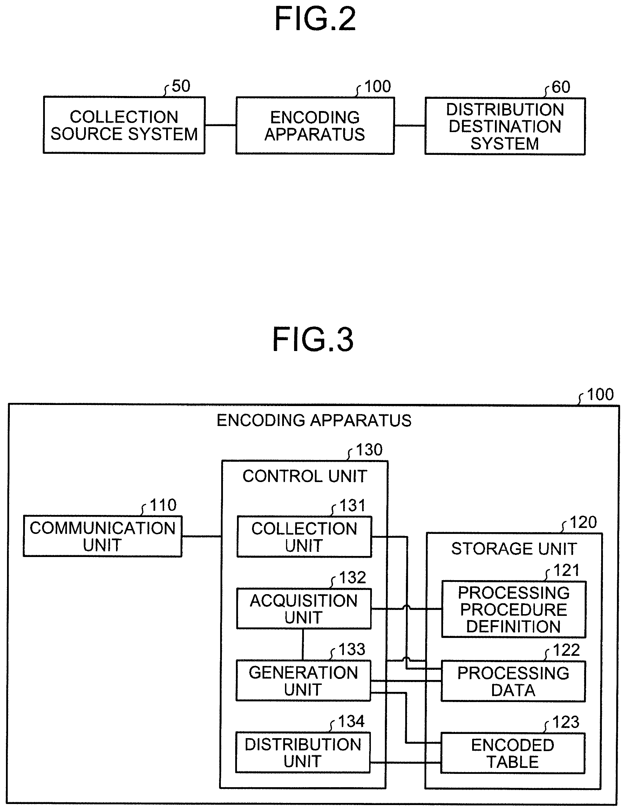

Next, an example of a configuration of a system according to the present embodiment will be described. FIG. 2 is a diagram illustrating the configuration of the system according to the present embodiment. As illustrated in FIG. 2, the system includes a collection source system 50, a distribution destination system 60, and an encoding apparatus 100. The encoding apparatus 100 is connected to the collection source system 50 and the distribution destination system 60 via a network and the like.

The collection source system 50 is a system that collects information to be processed, such as the table 10 described in FIG. 1. In the following description, the information to be processed, collected by the collection source system 50 will be referred to as processing data. The collection source system 50 transmits the processing data to the encoding apparatus 100.

The distribution destination system 60 is a system that receives an encoded table 123 output from the encoding apparatus 100 and performs various types of processing.

The encoding apparatus 100 is an apparatus that identifies columns to be processed from the table 10 in which a plurality of columns are separated by delimiters, and encodes the columns to be processed in units of columns to generate the encoded table 123. For example, the table 10 is included in the processing data transmitted from the collection source system 50. The encoding apparatus 100 distributes the encoded table 123 to the distribution destination system 60.

FIG. 3 is a functional block diagram illustrating a configuration of the encoding apparatus according to the present embodiment. As illustrated in FIG. 3, the encoding apparatus 100 includes a communication unit 110, a storage unit 120, and a control unit 130.

The communication unit 110 is a processing unit that performs data communication with the collection source system 50 and the distribution destination system 60 via the network. The control unit 130 to be described later exchanges data with the collection source system 50 and the distribution destination system 60 via the communication unit 110. The communication unit 110 corresponds to a communication apparatus.

The storage unit 120 includes a processing procedure definition 121, processing data 122, and the encoded table 123. The storage unit 120 corresponds to a semiconductor memory element such as a RAM (Random Access Memory), a ROM (Read Only Memory), and a flash memory. Alternatively, the storage unit 120 corresponds to a storage device such as a hard disk and an optical disk.

The processing procedure definition 121 is information that defines information about the table to be processed and information about the columns to be processed (processing target column information 11). The processing procedure definition 121 is information including a data structure definition file and a data processing definition file. The processing procedure definition 121 is generated in advance by an administrator and the like.

The data structure definition file is a file in which table information about data to be processed is stored. The table information is specified by item names. For example, if the item names indicated by the table information are "slip ID, serial number, time of sale, product code, shop ID, and number of sales", the table 10 described in FIG. 1 is the table to be processed.

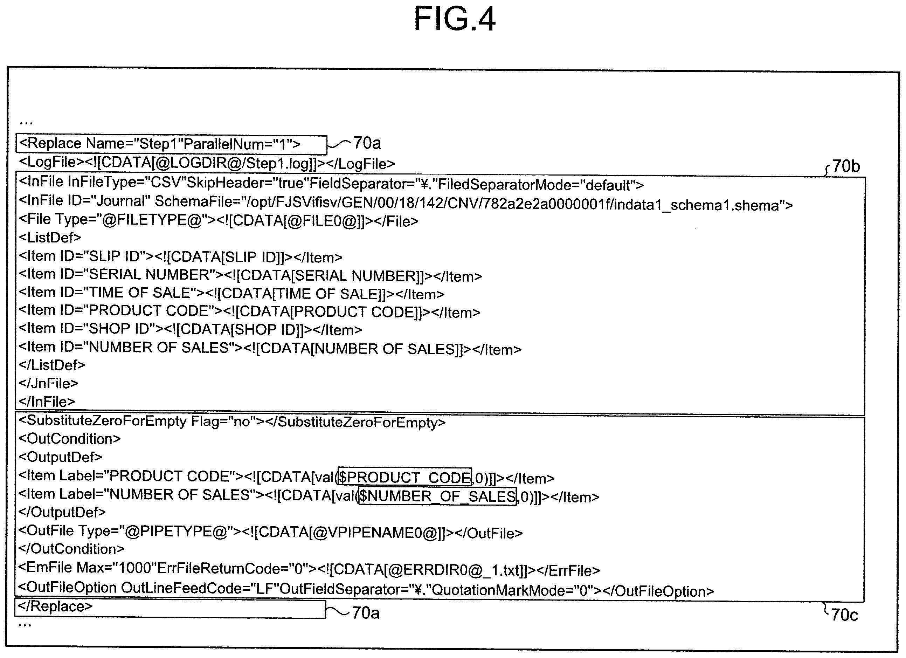

The data processing definition file is information corresponding to the processing target column information 11 described in FIG. 1. FIG. 4 is a diagram illustrating an example of a data structure of the data processing definition file. As illustrated in FIG. 4, the data processing definition file defines each data conversion process in an area 70a. For example, if a data conversion process such as connection and column extraction is performed, "Replace" is set in the area 70a.

Definition information about input data for data extraction is set in an area 70b. The item names (columns) of the table to be processed are defined by ID names, and used in the processing described in an area 70c.

Definition information about output data (encoded table 123) is set in the area 70c. The item names of the columns to be processed are specified in the area 70c. In the example illustrated in FIG. 4, the item names of the columns to be processed are defined as "product code" and "number of sales".

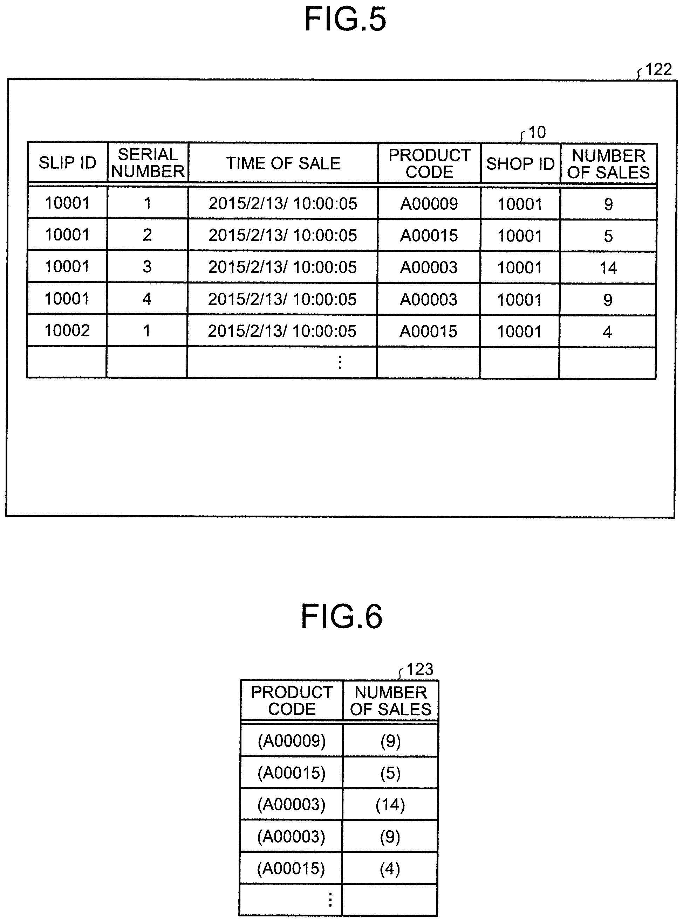

The processing data 122 is information generated by the collection source system 50. FIG. 5 is a diagram illustrating an example of a data structure of the processing data. For example, the processing data 122 includes the table 10 and not-illustrated other tables. Item names and values corresponding to respective items are set in each table.

The encoded table 123 is information generated by a generation unit 133 to be described below. FIG. 6 is a diagram illustrating an example of a data structure of the encoded table. As described in FIG. 1, the encoded table 123 is formed by connecting the codes encoded in units of columns. In the encoded table 123, the connected portions of the linked codes function as delimiters. The column separations can thus be determined without decoding the encoded table 123.

The control unit 130 includes a collection unit 131, an acquisition unit 132, a generation unit 133, and a distribution unit 134. The control unit 130 corresponds to an integrated device such as an ASIC (Application Specific Integrated Circuit) and a FPGA (Field Programmable Gate Array). Alternatively, the control unit 130 corresponds to an electronic circuit such as a CPU and an MPU (Micro Processing Unit).

The collection unit 131 is a processing unit that collects the processing data 122 from the collection source system 50 illustrated in FIG. 1. The collection unit 131 stores the collected processing data 122 into the storage unit 120.

The acquisition unit 132 is a processing unit that obtains the processing procedure definition 121 stored in the storage unit 120. The acquisition unit 132 outputs the processing procedure definition 121 to the generation unit 133.

The generation unit 133 is a processing unit that extracts the table to be processed from the processing data 122 on the basis of the processing procedure definition 121, and generates the encoded table 123 from the table.

An example of processing by which the generation unit 133 extracts the table to be processed from the processing data 122 will be described. The generation unit 133 refers to the data structure definition file included in the processing procedure definition 121, and identifies items included in the table to be processed. The generation unit 133 compares the identified items with the items set in the table of the processing data 122, and extracts a table including all the identified items from the processing data 122.

An example of processing by which the generation unit 133 generates the encoded table 123 on the basis of the extracted table will be described. The generation unit 133 refers to the data processing definition file included in the processing procedure definition 121, and encodes the columns to be processed, included in the table 10, in units of columns. The generation unit 133 connects the encoded columns to generate the encoded table 123.

Specific processing of the generation unit 133 corresponds to the processing described in FIG. 1. The data processing definition file corresponds to the processing target column information 11 illustrated in FIG. 1. The table extracted as the table to be processed corresponds to the table 10.

For example, the items "slip ID, serial number, time of sale, product code, shop ID, and number of sales" and values corresponding to the respective items are set in the table 10. The values of the columns corresponding to the respective items are separated by delimiters. The generation unit 133 scans the columns of the table 10 on the basis of the data processing definition file.

The generation unit 133 scans the columns of the table 10. If a column to be processed is hit, the generation unit 133 extracts the hit column in units of columns, and encodes the extracted column. For example, the generation unit 133 encodes the column on the basis of a conversion rule that associates the information about columns with codes corresponding to information about the columns. The generation unit 133 repeatedly executes the foregoing processing to encode the columns to be processed in units of columns. The generation unit 133 connects the pieces of encoded information to generate the encoded table 123.

The generation unit 133 arranges and connects the encoded columns according to a positional relationship of the columns included in the table 10, whereby the encoded table 123 is generated. For example, in the not-encoded table 10, the product code "A00009" and the number of sales "9" are in the same record of the first row. When generating the encoded table 123, the generation unit 133 then arranges and connects the encoded columns "(A00009)" and "(9)" in the record of the first row.

The distribution unit 134 is a processing unit that transmits the encoded table 123 generated by the generation unit 133 to the distribution destination system 60.

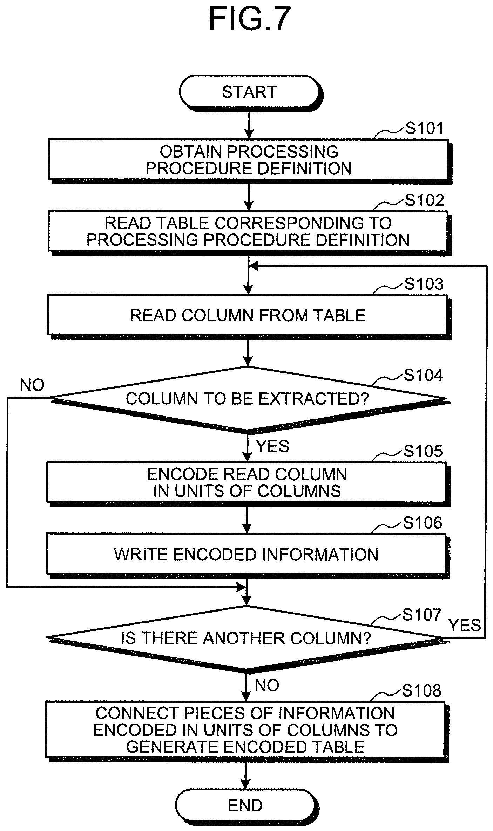

Next, an example of the processing procedure of the encoding apparatus 100 according to the present embodiment will be described. FIG. 7 is a flowchart illustrating the processing procedure of the encoding apparatus. As illustrated in FIG. 7, the acquisition unit 132 of the encoding apparatus 100 obtains the processing procedure definition 121 (step S101).

The generation unit 133 of the encoding apparatus 100 reads a table corresponding to the processing procedure definition 121 from the processing data 122 (step S102). The generation unit 133 reads a column from the table (step S103).

The generation unit 133 determines whether the read column is one to be processed (step S104). If the read column is not one to be processed (step S104, No), the generation unit 133 proceeds to step S107.

On the other hand, if the read column is one to be processed (step S104, Yes), the generation unit 133 encodes the read column in units of columns (step S105). The generation unit 133 writes the encoded information (step S106).

The generation unit 133 determines whether there is another column (step S107). If there is another column (step S107, Yes), the generation unit 133 proceeds to step S103.

On the other hand, if there is no other column (step S107, No), the generation unit 133 connects the pieces of information encoded in units of columns to generate the encoded table 123 (step S108).

Next, an effect of the encoding apparatus 100 according to the present embodiment will be described. The encoding apparatus 100 identifies the columns to be processed from the table 10 in which a plurality of columns are separated by delimiters, and performs encoding in units of columns to generate the encoded table 123. Even in the encoded state, column separations can thus be identified in units of the encoded codes. For example, in the example illustrated in FIG. 1, the presence of the separation between "(A00009)" and "(9)" can be identified. Encoded information from which column separations can be determined can thus be generated without generating an intermediate file.

The encoding apparatus 100 scans the plurality of columns included in the table 10, and when a column to be processed is identified, encodes the identified column in units of columns. As compared to the conventional technique in which all the columns to be encoded are extracted before encoding, the encoding can be performed efficiently since the extraction and encoding can be performed concurrently.

The encoding apparatus 100 arranges the encoded columns according to the positional relationship of the columns included in the table 10, and connects the encoded columns to generate the encoded table 123. If the items of the table 10 and the columns to be processed are known, which column corresponds to which item can thus be determined without decoding the encoded table 123.

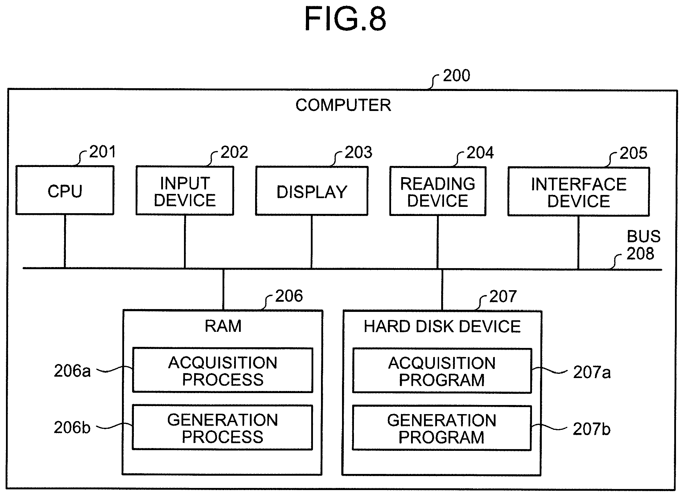

Next, an example of a computer that executes an encoding program for implementing functions similar to those of the encoding apparatus 100 described in the foregoing embodiment will be described. FIG. 8 is a diagram illustrating the example of the computer that executes the encoding program.

As illustrated in FIG. 8, a computer 200 includes a CPU 201 which executes various types of arithmetic processing, an input device 202 which accepts data input from a user, and a display 203. The computer 200 also includes a reading device 204 which reads programs and the like from a storage medium, and an interface device 205 which exchanges data with another computer via a network. The computer 200 includes a RAM 206 which temporarily stores various types of information, and a hard disk device 207. The devices 201 to 207 are connected with a bus 208.

The hard disk device 207 reads and loads an acquisition program 207a and a generation program 207b into the RAM 206. The acquisition program 207a functions as an acquisition process 206a. The generation program 207b functions as a generation process 206b. For example, the acquisition process 206a corresponds to the acquisition unit 132. The generation process 206b corresponds to the generation unit 133.

The acquisition program 207a and the generation program 207b do not necessarily need to be stored in the hard disk device 207 from the beginning. For examples, the programs are stored in a "portable physical medium" such as a flexible disk (FD), a CD-ROM, a DVD disk, an optical magnetic disk, and an IC card inserted into the computer 200. The computer 200 may read and execute the acquisition program 207a and the generation program 207b.

Encoded information from which column separations can be determined can be generated without generating an intermediate file.

## Claims

1. An encoding program that causes a computer to execute a process comprising:
obtaining (S101) processing target column information for identifying a plurality of processing target columns to be processed among a plurality of columns included in a table in which the plurality of columns are separated by separation information;
encoding (S105) the plurality of processing target columns of the table in cells of the target columns by using the processing target column information;
arranging the encoded plurality of processing target columns according to a positional relationship of the target columns in the table; and
connecting (S108) the encoded plurality of processing target columns to generate an encoded table.

2. The encoding program according to claim 1, wherein the encoding includes scanning a plurality of columns included in the table, and encoding an identified processing target column in units of columns when the processing target column is identified.

3. An encoding method comprising:
obtaining processing target column information for identifying a plurality of processing target columns to be processed among a plurality of columns included in a table in which the plurality of columns are separated by separation information;
encoding the plurality of processing target columns of the table in cells of the target columns by using the processing target column information;
arranging the encoded plurality of processing target columns according to a positional relationship of the target columns in the table; and
connecting the encoded plurality of processing target columns to generate an encoded table.

4. The encoding method according to claim 3, wherein the encoding includes scanning a plurality of columns included in the table, and encoding an identified processing target column in units of columns when the processing target column is identified.

5. An encoding apparatus comprising:
an acquisition unit (132) that obtains processing target column information for identifying a plurality of processing target columns to be processed among a plurality of columns included in a table in which the plurality of columns are separated by separation information; and
a generation unit (133) that encodes the plurality of processing target columns of the table in cells of the target columns by using the processing target column information, arranges the encoded plurality of processing target columns according to a positional relationship of the target columns in the table and connects the encoded plurality of processing target columns in the table and connects the encoded plurality of processing target columns to generate an encoded table.

6. The encoding apparatus according to claim 5, wherein the generation unit (133) scans a plurality of columns included in the table, and encodes an identified processing target column in units of columns when the processing target column is identified.

## Patentansprüche

1. Codierungsprogramm, das einen Computer veranlasst, einen Prozess auszuführen, umfassend:
Erhalten (S101) von Verarbeitungszielspalteninformationen zum Identifizieren einer Vielzahl von Verarbeitungszielspalten, die zu verarbeiten sind, unter einer Vielzahl von Spalten, die in einer Tabelle beinhaltet sind, in der die Vielzahl von Spalten durch Trennungsinformationen getrennt sind;
Codieren (S105) der Vielzahl von Verarbeitungszielspalten der Tabelle in Zellen der Zielspalten, indem die Verarbeitungszielspalteninformationen verwendet werden;
Anordnen der codierten Vielzahl von Verarbeitungszielspalten gemäß einer Positionsbeziehung der Zielspalten in der Tabelle; und
Verbinden (S108) der codierten Vielzahl von Verarbeitungszielspalten, um eine codierte Tabelle zu erzeugen.

2. Codierungsprogramm nach Anspruch 1, wobei die Codierung Abtasten einer Vielzahl von Spalten die in der Tabelle beinhaltet sind, und Codieren einer identifizierten Verarbeitungszielspalte in Einheiten von Spalten beinhaltet, wenn die Verarbeitungszielspalte identifiziert wird.

3. Codierungsverfahren, umfassend:
Erhalten von Verarbeitungszielspalteninformationen zum Identifizieren einer Vielzahl von Verarbeitungszielspalten, die zu verarbeiten sind, unter einer Vielzahl von Spalten, die in einer Tabelle beinhaltet sind, in der die Vielzahl von Spalten durch Trennungsinformationen getrennt sind;
Codieren der Vielzahl von Verarbeitungszielspalten der Tabelle in Zellen der Zielspalten, indem die Verarbeitungszielspalteninformationen verwendet werden;
Anordnen der codierten Vielzahl von Verarbeitungszielspalten gemäß einer Positionsbeziehung der Zielspalten in der Tabelle; und
Verbinden der codierten Vielzahl von Verarbeitungszielspalten, um eine codierte Tabelle zu erzeugen.

4. Codierungsverfahren nach Anspruch 3, wobei die Codierung Abtasten einer Vielzahl von Spalten, die in der Tabelle beinhaltet sind, und Codieren einer identifizierten Verarbeitungszielspalte in Einheiten von Spalten beinhaltet, wenn die Verarbeitungszielspalte identifiziert wird.

5. Codierungseinrichtung, umfassend:
eine Beschaffungseinheit (132), die Verarbeitungszielspalteninformationen erhält zum Identifizieren einer Vielzahl von Verarbeitungszielspalten, die zu verarbeiten sind, unter einer Vielzahl von Spalten, die in einer Tabelle beinhaltet sind, in der die Vielzahl von Spalten durch Trennungsinformationen getrennt sind;
eine Erzeugungseinheit (133), die die Vielzahl von Verarbeitungszielspalten der Tabelle in Zellen der Zielspalten codiert, indem die Verarbeitungszielspalteninformationen verwendet werden, die codierte Vielzahl von Verarbeitungszielspalten gemäß einer Positionsbeziehung der Zielspalten in der Tabelle anordnet und die codierte Vielzahl von Verarbeitungszielspalten in der Tabelle verbindet und die codierte Vielzahl von Verarbeitungszielspalten verbindet, um eine codierte Tabelle zu erzeugen.

6. Codierungseinrichtung nach Anspruch 5, wobei die Erzeugungseinheit (133) eine Vielzahl von Spalten abtastet, die in der Tabelle beinhaltet sind, und eine identifizierte Verarbeitungszielspalte in Einheiten von Spalten codiert, wenn die Verarbeitungszielspalte identifiziert wird.

## Revendications

1. Programme de codage qui amène un ordinateur à exécuter un processus comprenant les étapes consistant à :
obtenir (S101) des informations de colonne cible de traitement pour identifier une pluralité de colonnes cibles de traitement à traiter parmi une pluralité de colonnes incluses dans un tableau dans lequel la pluralité de colonnes sont séparées par des informations de séparation ;
coder (S105) la pluralité de colonnes cibles de traitement du tableau dans des cellules des colonnes cibles en utilisant les informations de colonne cible de traitement ;
agencer la pluralité codée de colonnes cibles de traitement selon une relation de position des colonnes cibles dans le tableau ; et
raccorder (S108) la pluralité codée de colonnes cibles de traitement pour générer un tableau codé.

2. Programme de codage selon la revendication 1, dans lequel l'étape consistant à coder inclut les étapes consistant à balayer une pluralité de colonnes incluses dans le tableau, et à coder une colonne cible de traitement identifiée dans des unités de colonnes lorsque la colonne cible de traitement est identifiée.

3. Procédé de codage comprenant les étapes consistant à :
obtenir des informations de colonne cible de traitement pour identifier une pluralité de colonnes cibles de traitement à traiter parmi une pluralité de colonnes incluses dans un tableau dans lequel la pluralité de colonnes sont séparées par des informations de séparation ;
coder la pluralité de colonnes cibles de traitement du tableau dans des cellules des colonnes cibles en utilisant les informations de colonne cible de traitement ;
agencer la pluralité codée de colonnes cibles de traitement selon une relation de position des colonnes cibles dans le tableau ; et
raccorder la pluralité codée de colonnes cibles de traitement pour générer un tableau codé.

4. Procédé de codage selon la revendication 3, dans lequel l'étape consistant à coder inclut les étapes consistant à balayer une pluralité de colonnes incluses dans le tableau, et à coder une colonne cible de traitement identifiée dans des unités de colonnes lorsque la colonne cible de traitement est identifiée.

5. Appareil de codage comprenant :
une unité d'acquisition (132) qui obtient des informations de colonne cible de traitement pour identifier une pluralité de colonnes cibles de traitement à traiter parmi une pluralité de colonnes incluses dans un tableau dans lequel la pluralité de colonnes sont séparées par des informations de séparation ; et
une unité de génération (133) qui code la pluralité de colonnes cibles de traitement du tableau dans des cellules des colonnes cibles en utilisant les informations de colonne cible de traitement, agence la pluralité codée de colonnes cibles de traitement selon une relation de position des colonnes cibles dans le tableau et raccorde la pluralité codée de colonnes cibles de traitement dans le tableau et raccorde la pluralité codée de colonnes cibles de traitement pour générer un tableau codé.

6. Appareil de codage selon la revendication 5, dans lequel l'unité de génération (133) balaye une pluralité de colonnes incluses dans le tableau, et code une colonne cible de traitement identifiée dans des unités de colonnes lorsque la colonne cible de traitement est identifiée.
